# EUROPEAN PATENT APPLICATION

(11) **EP 0 967 465 A2**
(43) Date of publication of application: **29.12.1999**
(21) Application number: 99110887.9
(22) Date of filing: 07.06.1999
(51) Int. Cl.: G01D 11/28, G12B 11/04, B60K 35/00

(54) **Back-lit indicator device substantially free from halos of light around the pointer, in particular for vehicle dashboards**

(30) Priority: 19.06.1998 IT MI981417
(71) Applicant: MAGNETI MARELLI S.p.A., 20145 Milano (IT)
(72) Inventor: Angelini, Mario, 27021 Bereguardo (IT); Castellani, Andrea, 20136 Milano (IT); Fallini, Andrea, 20025 Legnano (IT)
(74) Representative: Eccetto, Mauro

(57) **Abstract**

A back-lit indicator device including a support plane for a graphical indicator panel, a pointer mounted movably through the support plane in order to cooperate with the graphical panel, and a cavity below the support plane for the graphical indicator panel which houses a light source, the pointer including a light guide disposed along at least part of the pointer and projecting into the cavity through the support plane for the graphical panel; a screening member having a high absorbance such that is substantially impervious to light is interposed between the light guide and the cavity housing the light source, which member is borne rigidly by the pointer in order to intercept any light rays whose reflection could produce halos of light about the pointer.

## Description

The present invention relates to a back-lit indicator device particularly adapted for use on vehicle dashboards, which is structured such that in use it is substantially free from irritating and unappealing halos of light around its pointer.

It is known that indicator devices comprise a support plane for a graphical indicator panel (which may be formed by a calibrated scale of any kind and/or by a group of ideograms) and at least one pointer cooperating with the graphical indicator panel in order to provide the user with one or a plurality of analog data; conventionally, the pointer is movable and is formed by a needle keyed on a rotary pin. In back-lit devices, the light source is disposed in a cavity disposed below the support plane for the graphical indicator panel and, via a hole in the plane, for instance the hole through which the rotary pin passes, a light guide collects the light and conveys it in order to illuminate the graphical panel and/or the pointer, depending on whether the light guide is incorporated with the support plane for the graphical panel and/or with the pointer or a part thereof.

In indicator devices of the type described above, the light that is not collected by the light guide may be reflected on the surfaces of this guide and/or of the other members forming the device and may emerge at unpredictable angles from the above-mentioned hole, forming unappealing and irritating halos of light. In the case of devices with a back-lit pointer in particular, a halo of light is formed around the whole of the pointer and interferes with the graphical indicator panel, making them harder for the user to see.

The object of the invention is to provide a back-lit indicator device of the type described above which is free from this drawback (or in which this drawback is at least substantially attenuated), while ensuring that the overall indicator device is very simple to produce and mount and is of reduced bulk and cost.

According to the invention, a back-lit indicator device is therefore provided, in particular for vehicle dashboards, comprising a support plane for a graphical indicator panel, at least one pointer mounted through the support plane in order to cooperate with the graphical indicator panel and at least one cavity below the support plane for the graphical indicator panel which houses a light source, the pointer comprising a light guide disposed along at least part of the pointer and projecting within the cavity housing the light source via the support plane for the graphical indicator panel, characterised in that it comprises a screening member having an absorbance such that it is substantially impervious to light which is interposed between the light guide and the cavity housing the light source and is borne rigidly by the pointer.

In general, the pointer is a moving pointer whose hub is keyed on a rotary pin disposed through a hole passing through the support plane of the indicator panel and the light guide forms at least part of the hub.

In this way the light emerging from the cavity housing the light source via the hole cannot be reflected on the light guide or the other adjacent surfaces of the indicator and the support plane of the graphical panel, but is absorbed by the screening member, thereby preventing the formation of undesirable halos of light around the pointer.

Further characteristic features and advantages of the present invention are set out in the following non-limiting description of two embodiments thereof, given purely by way of example and made with reference to the accompanying drawings, in which:
Fig. 1 is a view in elevation and cross-section along the pointer of a back-lit indicator device of the invention;
Fig. 2 shows the same view of a variant of the device of Fig. 1.

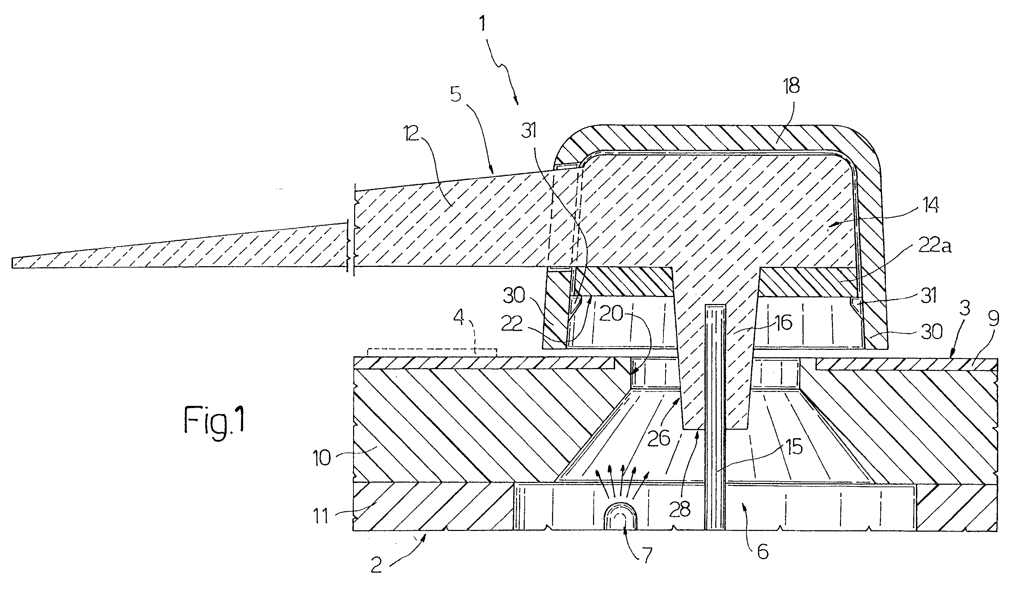

In Fig. 1, a back-lit indicator device, adapted in particular for use on a dashboard 2 (only part of which is shown in diagrammatic form for simplicity) of a vehicle, for instance an automobile vehicle, is shown overall by 1. The indicator device 1 comprises a support plane 3 for a graphical indicator panel 4 shown diagrammatically in dashed lines, at least one pointer 5 mounted through the support plane 3 in order to cooperate with the graphical indicator panel 4 and at least one cavity 6 below the support plane 3 for the graphical indicator 4 which houses a light source shown diagrammatically by 7, for instance a lamp, an LED or any other known light source.

In the non-limiting embodiment shown, the plane 3 with the relative graphical panel 4 is formed by a sheet 9 borne by a member 10 partly bounding the cavity 6 and supported in turn on an underlying support 11, for instance provided integrally with the dashboard 2 as it forms an integral part thereof, in the same way as the remaining part of the cavity 6; the pointer 5 is of the back-lit type and therefore comprises a light guide 12 made from a transparent material of low absorbance disposed along at least part of the pointer 5 and projecting through the plane 3 into the cavity 6 housing the light source 7 in order to receive the light needed to illuminate the pointer 5 from the latter.

It is evident that the structure described for the pointer 5 is completely independent from that of the plane 3 of the graphical panel 4 which may in turn be illuminated by an external light source borne by the dashboard 2 on one side of the plane 3, or may in turn be of the back-lit type, in which case the sheet 9 is provided with transparent areas and the member 10 is formed such that it wholly or partly forms a light guide conveying the light from the source 7 below the graphical panel 4 to be illuminated. Consequently, the following description of the pointer 5 is valid for any type of lighting of the graphical panel 4 (including cases in which there is no lighting).

In the embodiment shown, the pointer 5 is a moving pointer, in which the light guide 12 forms at least part of a hub 14 for the pointer 5, which hub 14 is keyed on a known rotary control pin 15 mounted in a known manner (not shown for simplicity) through the cavity 6 and in turn connected, for instance, to the moving components of a known instrument forming part of the dashboard 2.

The entire pointer 5 is in particular defined by the light guide 12 which may possibly be partly covered by a layer of opaque varnish in order to obtain particular optical effects and the hub 14 comprises an assembly projection 16 of substantially frustoconical shape which projects from the side opposite to an opaque nut 18 covering the hub 14, coaxially with the pin 15, on which it is keyed in an angularly rigid manner; in this way, the projection 16 is formed entirely by the light guide 12 and projects into the cavity 6 in order to collect the light generated by the source 7, in this case via a through access hole 20 to the cavity 6 provided through the plane 3 and, in particular, to the member 10 in order to communicate with the cavity 6 and at the same time to receive the pin 15 projecting beyond the plane 3.

In detail, the nut 18, made from a plastic impervious to light and shaped a- a hood, is fitted externally on the hub 14 on the side opposite to the pin 15 in order to conceal not only the hub 14 but also the underlying hole 20 and to screen the light source 7 such that the only light emerging from the cavity 6 is that collected by the light guide 12 (and by the possible light guide of the member 10).

In known indicator devices, however, the structure described is not sufficient to prevent part of the light from the source 7 from being reflected in an abnormal manner and, therefore, from being introduced into the light guide 12 at angles likely to create undesirable halos of light around the pointer 5.

According to the invention, therefore, the indicator device 1 further comprises a screening member 22 which is impervious to light, interposed between the light guide 12 and the cavity 6 housing the light source 7 and borne rigidly by the pointer 5; this screen 22 is, moreover, produced such that it is impervious to light as it is constructed such that it has a high absorbance, i.e. it is adapted to prevent the passage of light not by reflection, but by absorption (member with low reflectance); this may be obtained by using appropriate materials of dark colour and with low "gloss" surfaces for the screening member 22.

According to the invention, moreover, the hood formed by the nut 18 is disposed (and shaped) such that it is adapted to conceal not only the hole 20 but also the screen 22 from an observer facing the graphical panel 4.

In the embodiment of Fig. 1, the screening member 22 is formed by a disc 22a fitted about the projection 16 and disposed in abutment against the hub 14 at the base of the projection 16 on the side opposite to the nut 18.

More generally, the screening member 22 may also be formed by an opaque black decoration on the hub 14, again at the base of the projection 16 and on the side opposite to the nut 18, using various known methods, for instance screen printing, "in-mould" technologies, etc.

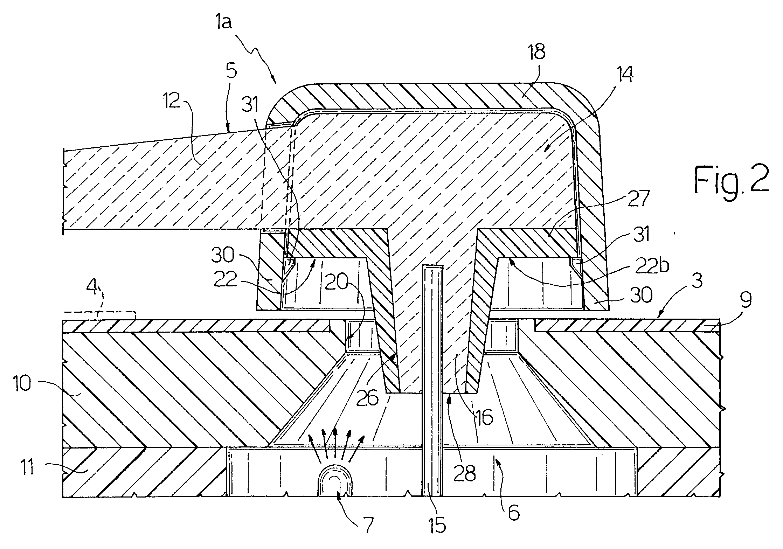

As shown in the variant 1a of Fig. 2, in which details similar or identical to those already described are shown by the same reference numerals for the sake of simplicity, the screening member 22 is formed by a tubular hood 22b fitted on the projection 16 in order entirely to cover at least a conical lateral surface 26 thereof (which is left exposed by the disc 22a of Fig. 1) and provided at the base of a flange 27 shaped in the same way as the disk 22a of Fig. 1 and disposed in abutment against the hub 14 on the side opposite to the nut 18. In this way, the only unscreened surface of the light guide 12 that remains facing the source 7 is a plane front annular surface 28 of the projection 16.

In both cases, the screening member 22 (in its variants 22a and 22b) is formed as a member independent from the pointer 5 to which it has, however, been rigidly secured, for instance by two-tone co-moulding or by duplicate moulding, or by gluing or, as shown in Figs. 1 and 2, by mounting in a snap-locking manner, obtained in the embodiment shown by means of the nut 18, respective elastic projections 30 of which, provided with teeth 31, engage the screening member 22 on the side facing the support plane 3 for the graphical panel 4 in order to clamp the member 22 between them and the hub 14 of the pointer 5 in abutment against the latter. Lastly, the member 22, in both versions 22a, 22b, may be formed, as described above, as an opaque black decoration on the hub 14 using known techniques.

## Claims

1. A back-lit indicator device, in particular for vehicle dashboards, comprising a support plane for a graphical indicator panel, at least one pointer mounted through the support plane in order to cooperate with the graphical indicator panel and at least one cavity below the support plane for the graphical indicator panel which houses a light source, the pointer comprising a light guide disposed along at least part of the pointer which projects into the cavity housing the light source through the support plane for the graphical indicator panel, characterised in that it comprises a screening member having an absorbance such that it is substantially impervious to light which is interposed between the light guide and the cavity housing the light source and is borne rigidly by the pointer.

2. An indicator device as claimed in claim 1, in which the pointer is a moving pointer, characterised in that the light guide forms at least part of a hub of the pointer, which hub is keyed on a rotary control pin mounted through the cavity housing the light source and is externally covered, on the side opposite the pin, by an opaque nut formed such that it conceals the screening member from an observer facing the graphical indicator panel.

3. An indicator device as claimed in claim 2, characterised in that the hub comprises a projection projecting from the side opposite the nut, coaxially with the pin, on which it is keyed, this projection being formed entirely by the light guide.

4. An indicator device as claimed in claim 3, characterised in that the screening member is formed by a disc fitted around the projection and disposed in abutment against the hub, on the side opposite the nut.

5. An indicator device as claimed in claim 3, characterised in that the screening member is formed by a tubular hood fitted on the projection in order entirely to cover a lateral surface thereof and provided at the base of a flange disposed in abutment against the hub, on the side opposite the nut.

6. An indicator device as claimed in claim 4 or 5, characterised in that the screening member is a member independent from the pointer which has been rigidly secured on the latter by gluing, two-tone co-moulding or duplicate moulding.

7. An indicator device as claimed in claim 4 or 5, characterised in that the screening member is a member independent from the pointer which is rigidly mounted by snap-locking on the latter by means of the nut, respective elastic projections of which engage the screening member on the side facing the support plane of the graphical indicator panel in order to clamp the screening member against the hub of the pointer.

8. An indicator device as claimed in claim 3, characterised in that the screening member is formed by an opaque black decoration integrally formed on the hub using methods of the type of screen printing, "in-mould", etc.

9. An indicator device as claimed in any one of claims 2 to 8, characterised in that the hub of the pointer is coupled to the pin via an underlying through hole of the support plane of the graphical indicator panel, which hole partly opens into the cavity housing the light source and, on the opposite side, is screened by the nut.
